# EUROPEAN PATENT APPLICATION

(11) **EP 2 031 481 A1**
(43) Date of publication of application: **04.03.2009**
(21) Application number: 08157003.8
(22) Date of filing: 27.05.2008
(51) Int. Cl.: G06F 3/01, A63H 13/00, A63H 30/00

(54) **Information communication and interaction device and method for the same**

(30) Priority: 29.08.2007 TW 96131981
(71) Applicant: Industrial Technology Research Institute, Hsinchu Chutung 31040 (CN)
(72) Inventor: Yu, Hung-Hsiu, 31040, Hsinchu (TW); Liu, Ching-Yi, 31040, Hsinchu (TW); Wu, Tung-Chuan, 31040, Hsinchu (TW); Wang, Wei-Han, 31040, Hsinchu (TW)
(74) Representative: Epping - Hermann - Fischer

(57) **Abstract**

An information communication and interaction device and method for the same are disclosed according to the present invention; the device is applicable to data processing device that can run the information communication software and has first data transmission unit; the data processing device is capable of processing information communication and sharing by using the information communication software through one data transmission system; features of the method of the present invention are: have one control unit process information communication with data processing device through one second data transmission unit, which is connecting to the first data transmission unit; and based on coded datum of the communicated information, the control unit commands one drive unit to drive one motion unit to bring about a real motion corresponding to the information; therefore, signified conception of the information can be expressed properly by means of real interaction.

## Description

### BACKGROUND OF THE INVENTION

### 1. Field of the Invention

This invention generally relates to an information communication and interaction device and method for the same, and more specifically, to an information communication and interaction device and method for the same, which are applicable to a data processing device that can run the information communication software and has first data transmission unit, and are capable of expressing signified conception of information by means of real interaction.

### 2. Description of Related Art

These days, far distance information communication has deeply rooted in most people's daily lives; the far distance information communication provides advantages of convenience and instantaneousness, therefore, almost everyone uses information communication software and gets on-line everyday and contacts conveniently with other users of data transmission system.

Among present information communication software, most provide users with specific emoticons and messages as means of emotive interaction while chatting and communicating with one another, however, this means provides only a plain and dull interaction; besides, when an user is on-line and using information communication software but has to be absent from the computer for running other business, an urgent note from other user can not be acquired by the user immediately, therefore, losing the advantage of instantaneousness.

In addition, according to claims of R.O.C. Patent No. WO01585521A1, an interactive toy and computer are connecting to each other, when user is playing video games via control devices, such as keyboard and mouse, the interactive toy will simultaneously bring about periodical motion reactions, however, this sort of interaction is periodical, and its motion reactions of interactions have nothing to do with subject matter of games, therefore, there is limited interactive effect.

Hence, it is a highly urgent issue in the industry for how to provide an information communication and interaction device and method for the same which are capable of effectively solving the aforementioned drawbacks of the prior arts, and further enhancing interaction and emotive expression effects as well as taking the advantage of instant communication provided by information communication software.

### SUMMARY OF THE INVENTION

In view of the disadvantages of the prior art mentioned above, it is a primary objective of the present invention to provide an information communication and interaction device and method for the same, which are capable of expressing signified conception of information by means of real interaction, and then bringing about better effects on interaction and emotive expression.

It is another objective of the present invention to provide an information communication and interaction device and method for the same, which provide users with an alert function to surely take the advantage of instantaneous communication of information communication software.

To achieve the aforementioned and other objectives, an information communication and interaction device and method for the same are provided according to the present invention. The information communication and interaction device is applicable to data processing device that can run the information communication software and has first data transmission unit; by running the information communication software, the data processing device is capable of processing information communication and sharing via data transmission system; the information communication and interaction device comprises:
one body; one second data transmission unit, which is set inside the body and is for connecting to the first data transmission unit via wire or wireless means;
one motion unit, which is set on the body and is for bringing about corresponding motions after being driven;
one drive unit, which is set inside the body and is for driving the motion unit; and one control unit, which is set inside the body and is electrically connecting to the second data transmission unit and the drive unit, the control unit processes information communication with the first data transmission unit of the data processing device via the second data transmission unit, and then based on coded datum of the communication information, the control unit commands the drive unit to drive the motion unit to bring about one real motion corresponding to the information.

To achieve the aforementioned and other objectives, the information communication and interaction method disclosed by the present invention is executed via the aforementioned information communication and interaction device, and is applicable to data processing device that can run the information communication software and has first data transmission unit, by running the information communication software, the data processing device is capable of processing information communication and sharing via data transmission system; the information communication and interaction method comprises:
at the time the information communication software of the data processing device is receiving or sending information, the control unit processes information communication with the data processing device via the second data transmission unit that is connecting to the first data transmission unit, and based on coded datum of the communication information, the control unit commands the drive unit to drive the motion unit to bring about real motion corresponding to the information.

In one preferable embodiment of the information communication and interaction device of the present invention, the first data transmission unit and the second data transmission unit are communication interfaces that have data transmission protocol of, Bluetooth, infra-red ray, IEEE 802.11, WiMax, or others; or the first data transmission unit and the second data transmission unit are connectors that have IEEE 1394 or USB data transmission interfaces; the data processing device is one of the group of computer, cell phone, personal digital assistant (PDA) and any digital device that can run the information communication software; the motion unit may include at least one of the group of mechanism, display part, and loudspeaker; the mechanism is mechanism with motor, and its drive unit is motor drive unit; the display part is one of the group of LED, LCD display, LED display, plasma display, and CRT display, and its drive unit is display part drive unit; and the control unit is control IC.

One preferable embodiment, corresponding to the abovementioned information communication and interaction device, further comprise one scent emitting unit; the scent emitting unit is set inside the body and is for correspondingly emitting specific scent based on the received coded datum.

According to the foregoing preferable embodiments of information communication and interaction device, one first embodiment of the information communication and interaction method comprises:
provide a interaction device and connect it to the first data transmission unit of the data processing device;
acquire coded datum corresponding to information sent from far end and received by the information communication software; and
then based on the acquired coded datum, drive the interaction device to bring about real motion corresponding to the information.

According to the foregoing preferable embodiment of information communication and interaction device, one second embodiment of the information communication and interaction method comprises:
provide an interaction device and connect it to the first data transmission unit of the data processing device;
input specific signal coded datum via input device of the interaction device; and
then based on the inputted coded datum, drive the interaction device to bring about one real motion corresponding to the information;
via the second data transmission unit, transmit corresponding coded datum to data processing device that has first data transmission unit; and
then have the data processing device transmit the communication information corresponding to the received coded datum to data processing device of far end user via the information communication software.

According to the foregoing preferable embodiment of information communication and interaction device, one third embodiment of the information communication and interaction method comprises:
provide an interaction device and connect it to the first data transmission unit of the data processing device;
at the time user sends specific communication information to data processing device of far end user via information communication software of data processing device, have the first data transmission unit transmit corresponding coded datum to information communication and interaction device that has second data transmission unit; and
based on the coded datum, drive the interaction device to bring about one real motion corresponding to the information.

According to the foregoing preferable embodiment of information communication and interaction device, one fourth embodiment of the information communication and interaction method comprises:
provide an interaction device and connect it to the first data transmission unit of the data processing device;
at the time user sends specific communication information to data processing device of far end user via information communication software of data processing device, have the first data transmission unit transmit corresponding coded datum to information communication and interaction device that has second data transmission unit;
based on the coded datum, drive the interaction device to bring about one real motion corresponding to the information; have the interaction device transmit its real interaction coded datum to one far end server via one third data transmission unit by means of wireless transmission; and then have one interaction device of a specific far end user receive the transmitted coded datum from the far end server, and also based on the received coded datum, drive the interaction device to bring about one real motion corresponding to the information.

Compared with the prior art, the information communication and interaction device and method for the same of the present invention have following features: the control unit carries out information communication with data processing device via the second data transmission unit that is connecting to the first data transmission unit and, based on code data of the communicated information, commands the drive unit to drive the motion unit to bring about one real motion corresponding to the information; by means of this, signified conception of the information can be expressed through real interaction, thereby reaching the foresaid primary objective; in addition, the present invention provides real emotive expressions, therefore, user with nearby data processing device can be alerted to incoming information from other users, thereby correspondingly bringing about alerting effects and reaching foresaid another objective.

### BRIEF DESCRIPTION OF DRAWINGS

The present invention can be more fully understood by reading the following detailed description of the preferred embodiments, with reference made to the accompanying drawings, wherein:
FIG. 1, which is an appearance diagram of the first embodiment of the information communication and interaction device according to the present invention;
FIGS. 2A through 2D, which are diagrams illustrating examples of motions according to the first embodiment of the information communication and interaction device of the present invention;
FIGS. 3A through 3H, which are appearance diagrams of the second embodiment of the information communication and interaction device according to the present invention;
FIG. 4 is a diagram of illustrating examples of motions according to the second embodiment of the information communication and interaction device of the present invention;
FIG. 5 is a diagram of applying either the first or the second embodiment of the information communication and interaction device of the present invention together with webcam to one liquid crystal display (LCD);
FIG. 6 is a diagram of displaying time on the display part in a daily waiting state according to either the first or the second embodiment of the information communication and interaction device of the present invention;
FIG. 7 is a diagram of integrating either the first or the second embodiment of the information communication and interaction device of the present invention with editing software;
FIGS. 8A through 8C, which are diagrams of the third embodiment of the information communication and interaction device according to the present invention;
FIG. 9, which is a codes conversion table of the third embodiment of information communication and interaction device of the present invention;
FIG. 10, which is an appearance diagram of the fourth embodiment of the information communication and interaction device according to the present invention;
FIGS. 11A through 11D, which are diagrams of illustrating examples of motions according to the fourth embodiment of information communication and interaction device of the present invention;
FIGS. 12A through 12D, which are appearance diagrams of the fifth embodiment of the information communication and interaction device according to the present invention;
FIGS. 13A and 13B are diagrams of either the fourth or the fifth embodiment of the present invention, which illustrate states of emitting and displaying specific scent based on specific symbol or message;
FIG. 14 is a diagram of applying either the fourth or the fifth embodiment of the information communication and interaction device of the present invention together with webcam to one liquid crystal display (LCD);
FIG. 15 is a diagram of displaying time on the display part in a daily waiting state of either the fourth or the fifth embodiment of the information communication and interaction device of the present invention;
FIG. 16 is a diagram of integrating either the fourth or the fifth embodiment of the information communication and interaction device of the present invention with editing software;
FIG. 17A, which is a diagram of the first embodiment of the information communication and interaction method of the present invention;
FIG. 17B, which is a flow chart of the first embodiment of the information communication and interaction method of the present invention;
FIG. 18A, which is a diagram of the second embodiment of the information communication and interaction method of the present invention;
FIG. 18B, which is a flow chart of the second embodiment of the information communication and interaction method of the present invention;
FIG. 19A, which is a diagram of the third embodiment of the information communication and interaction method of the present invention;
FIG. 19B, which is a flow chart of the third embodiment of the information communication and interaction method of the present invention;
FIG. 20A, which is a diagram of the fourth embodiment of the information communication and interaction method of the present invention; and
FIG. 20B, which is a flow chart of the fourth embodiment of the information communication and interaction method of the present invention.

### DETAILED DESCRIPTION OF PREFERRED EMBODIMENTS

The following illustrative embodiments are provided to illustrate the disclosure of the present invention, these and other advantages and effects can be apparently understood by those in the art after reading the disclosure of this specification. The present invention can also be performed or applied by other different embodiments. The details of the specification may be on the basis of different points and applications, and numerous modifications and variations can be devised without departing from the spirit of the present invention.

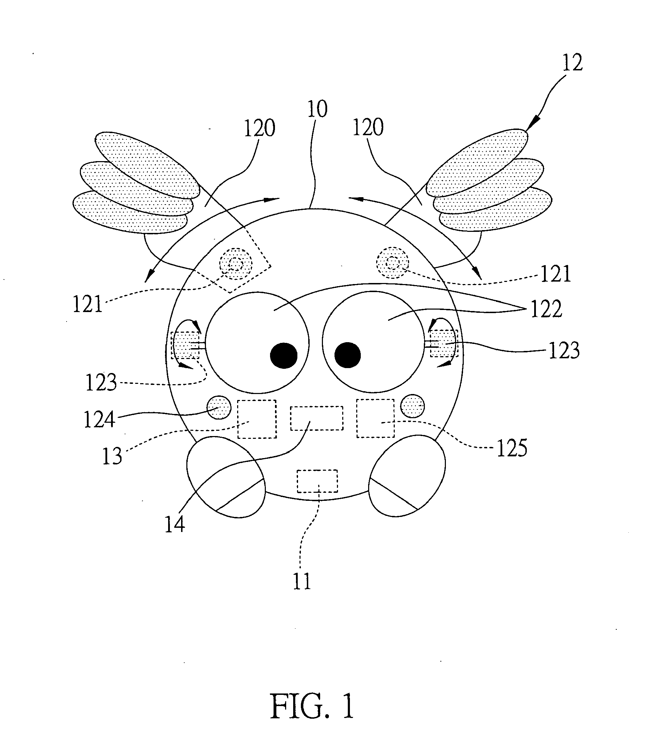

Please refer to FIG. 1, which is an appearance diagram of one first embodiment of the information communication and interaction device of the present invention; in the present embodiment, the information communication and interaction device is applicable to data processing device (not shown in the FIG.) that can run the information communication software and has one first data transmission unit; the data processing device can use the information communication software to process information communication and sharing via data transmission system; the information communication software can be either Microsoft Network (MSN) provide by Microsoft company, or Yahoo Messenger provided by Yahoo company, or Skype provided by Skype company; and the data processing device can be computer, cellphone, personal digital assistant (PDA), any digital device that can run the information communication software, or others.

As shown in the figure, the information communication and interaction device comprises one body 10, one second data transmission unit 11, one motion unit 12, one drive unit 13, and one control unit 14; each of the foresaid claimed elements is given a detailed description below:
The body 10: in the present embodiment, the body 10 is in a ball shape, which has two supporting legs that provide the body 10 with stable stand on object of desk; from the appearance, the ball shape part of the body is torso of the information communication and interaction device of the present invention, and the two supporting legs are extension legs of the torso of the of the information communication and interaction device of the present invention.

The second data transmission unit 11, which is set inside the body 10, is for connecting to the first data transmission unit via wire or wireless means; in the present invention, the first data transmission unit of the data processing device and the second data transmission unit 11 are connectors with USB data transmission interface, but not limited to as stated herein; in a case of wireless connection, the first data transmission unit and the second data transmission unit 11 can be interfaces with data transmission protocol of bluetooth, infra-red ray, IEEE 802.11, WiMax, or others; in a case of wire connection, the first data transmission unit and the second data transmission unit 11 can be connectors with IEEE 1394 data transmission interfaces.

According to the stated aforesaid, since the first data transmission unit and the second data transmission unit 11 of the present embodiment are connectors with USB data transmission interface, the information communication and interaction device obtains its required power from the data processing device via direct connection between the first data transmission unit and the second data transmission unit 11, namely, the USB data transmission interface transmits power provide by power supply module of the data processing device to the information communication and interaction device; naturally, interaction device of the present invention can also have power unit installed inside the body 10, the power unit can be one of the group of battery, solar energy, and power supply cord.

The motion unit 12, which is set on the body 10, is for bringing about real motion after being driven; in the present embodiment, the motion unit 12 comprises three parts: mechanism, display part 124, and loudspeaker 125; wherein, the mechanism further comprises wing mechanism, e.g. wing mechanism 120 with motor 121, and eye mechanism, e.g. eye mechanism 122 with motor 123, the display part 124 is one LED, and the loudspeaker 125 is a speaker.

The drive unit 13, which is set inside the body 10, is for driving the motion unit 12; in the present embodiment, the drive unit 13 comprises: motor drive unit that is electrically connecting to motors 122 and 123 of the mechanism, LED drive unit that is electrically connecting to the display part 124, and speaker drive unit that is electrically connecting to the loudspeaker 125.

The control unit 14, which is set inside the body 10, is electrically connecting to the second data transmission unit 11 and the drive unit 13, and is for acquiring coded datum corresponding to the information received by the information communication software or sending coded datum corresponding to the input information received from input device of the interaction device via the second data transmission unit 11, and then based on the acquired or sent coded datum, commanding the drive unit 13 to drive the motion unit 12 to bring about real motion corresponding to the information; in the present embodiment, the control unit 14 is one control IC; and the coded datum is one unique computer internal code corresponding to each information.

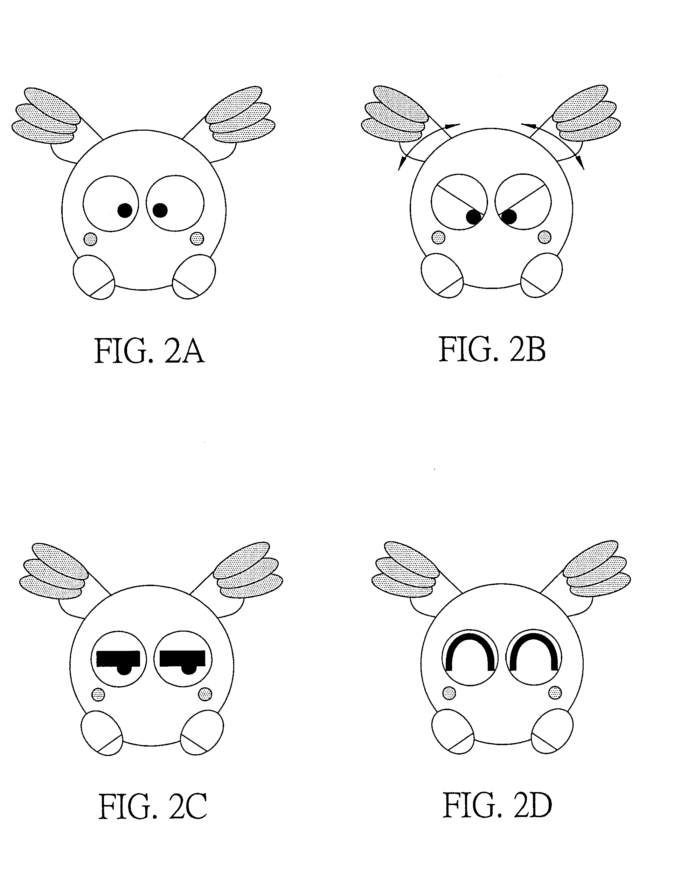

To give a clear view of motion pattern of the information communication and interaction device of the present invention, please refer to FIG. 2A as well as FIG. 2B; FIG. 2A is a diagram of preset state of the information communication and interaction device of the present invention; when a user receives an information as shown is FIG. 2B via the information communication software of the data processing device, the control unit 14 processes information communication with the data processing device via the second data transmission unit 11 that is connecting to the first data transmission unit, and then based on the coded datum of the communication information, the control unit 14 commands the drive unit 13 to drive the motor 121 to have the wing mechanism 120 swing, and to drive the motor 123 to have the eye mechanism 122 adjust to a state as shown in FIG. 2B; meanwhile, the drive unit 13 is commanded to drive the display part 124, namely, LED to emit light or flash, as well as to drive the loudspeaker 125 to give off preset voice or sound; therefore, as stated aforesaid, signified conception of the information can be expressed properly by means of real interaction; in addition, FIGS. 2C and 2D give further examples of motions of the present embodiment of the information communication and interaction device of the present invention.

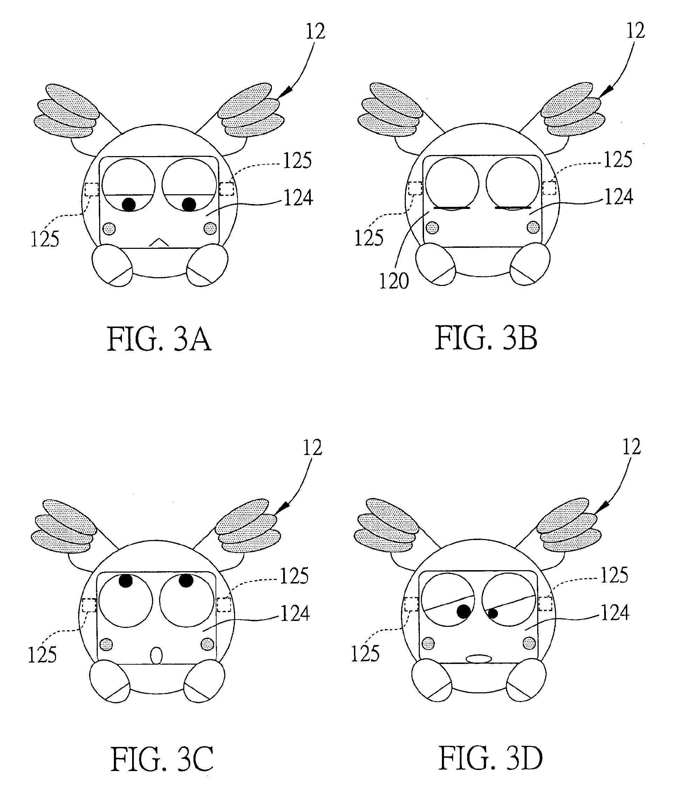

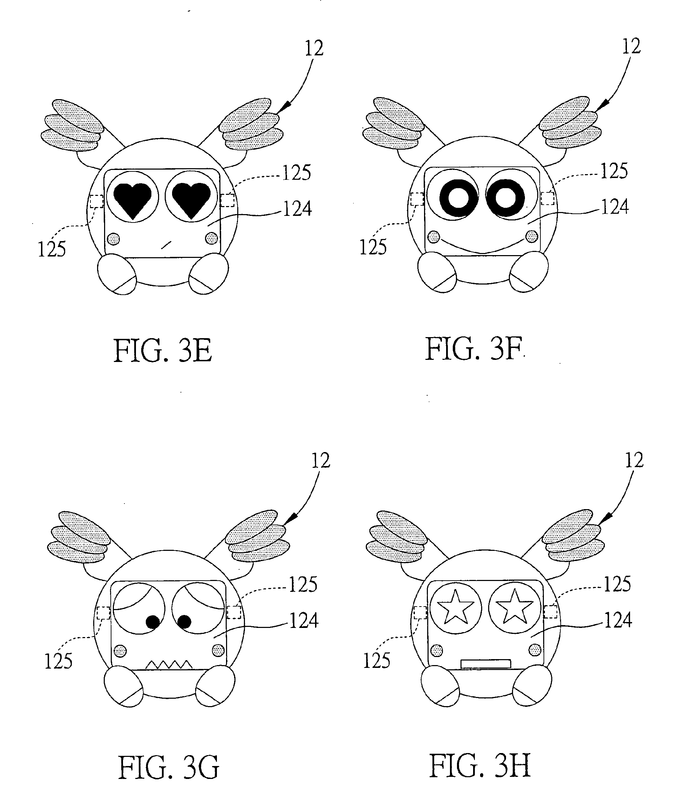

Please further refer to FIGS. 3A through 3H, which are appearance diagrams of one second embodiment of the information communication and interaction device of the present invention; as shown in the FIGS, the motion unit 12 of the second embodiment comprise, same as in the first embodiment, mechanism, display part 124, and loudspeaker 125 three parts, the major features of the second embodiment different from the first embodiment are: the display part 124 of the second embodiment is LCD display that replaces the LED and the eye mechanism of the first embodiment, and the LCD display provides a means of displaying information in more varieties, corresponding, the drive unit 13 for driving the LCD display is one display drive unit, wherein, the display part 124 is not limited to LCD display, the display part 124 can also be one of the group of LED display, plasma display, CRT display, and others.

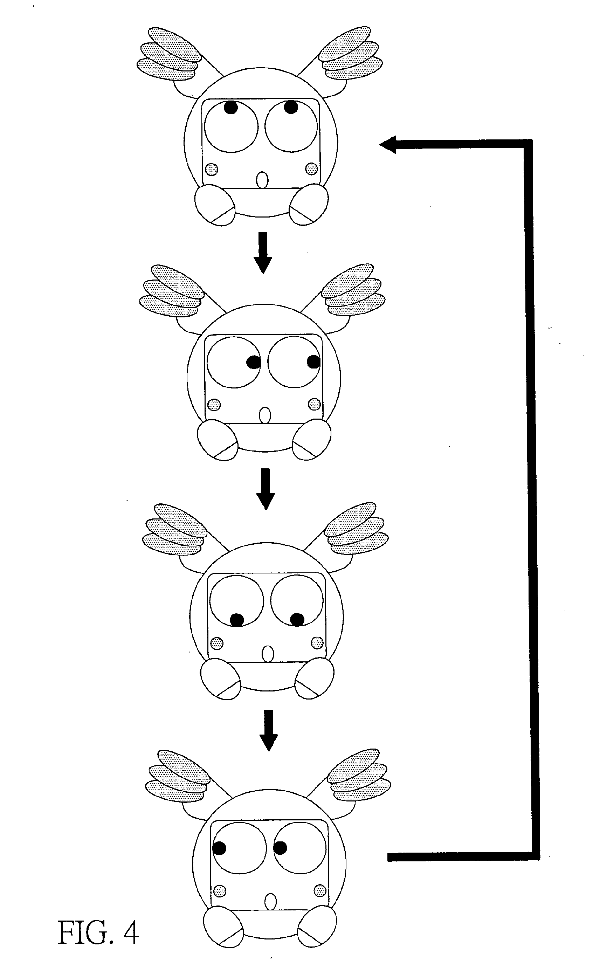

Naturally, of user receives dynamic information via the information communication software of the data processing device, the information communication and interaction device of the present invention is also capable of dynamically bringing about real motion, as shown in FIG. 4.

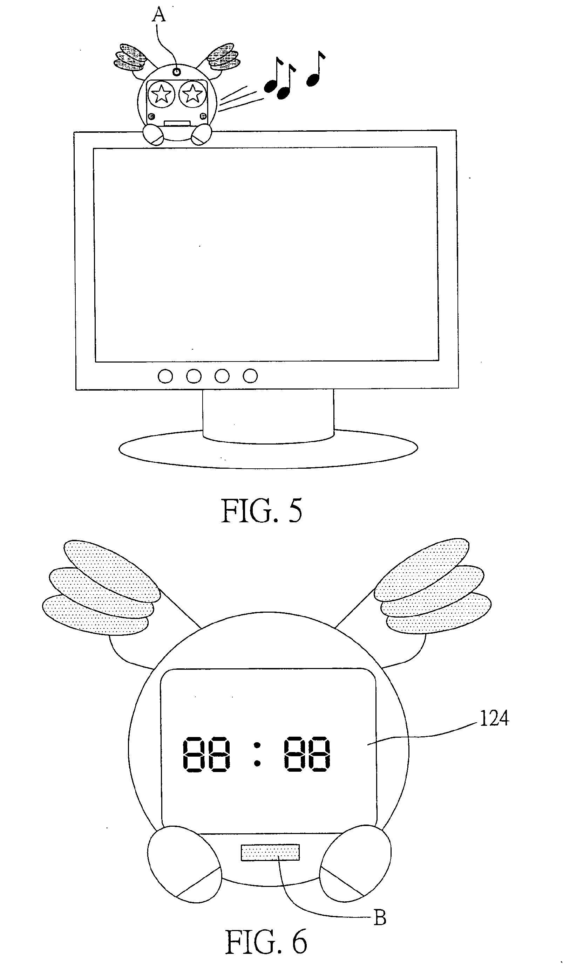

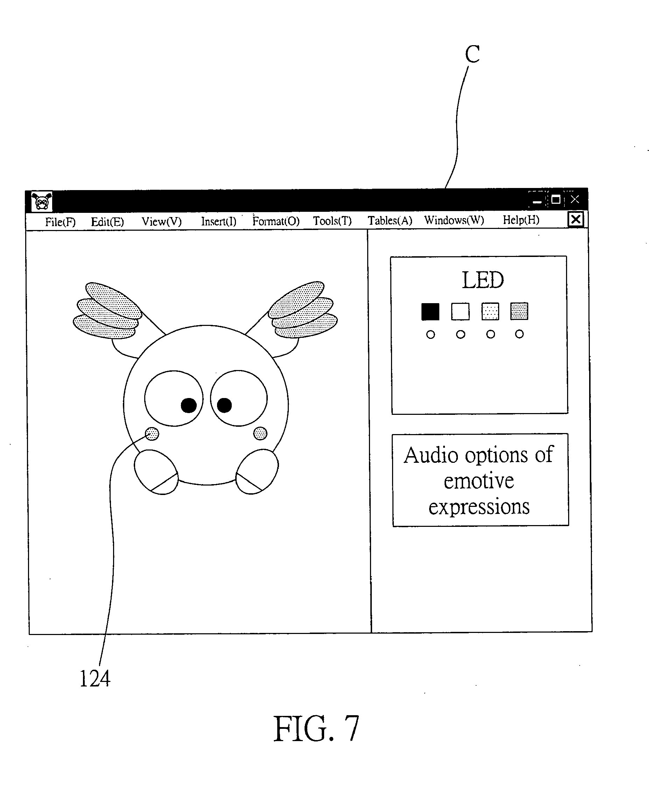

In addition, as shown in FIG. 5, the information communication and interaction device of the present invention can be used together with webcam, camera lens of the webcam is indicated by letter A in the FIG.; as shown in FIG. 6, time is displayed on the display part 124 in a daily waiting state; as shown in FIG. 7, user can adjust related settings of the information communication and interaction device of the present invention, e.g. colors of the display part 124 or sound effect brought by emotive expresses or setting of interactive motion , on the data processing device via the editing software C.

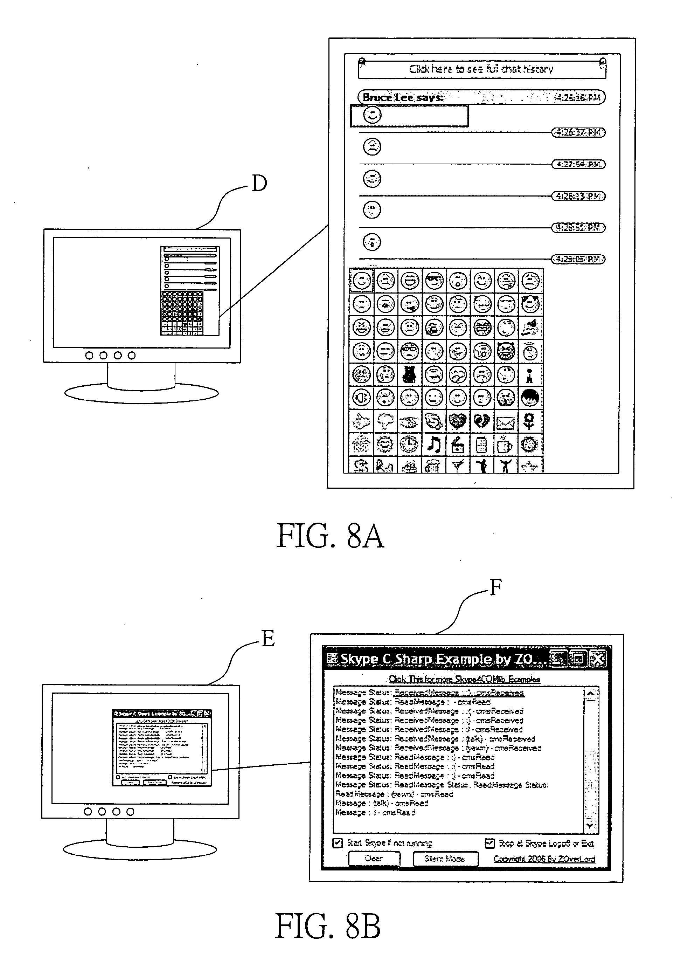

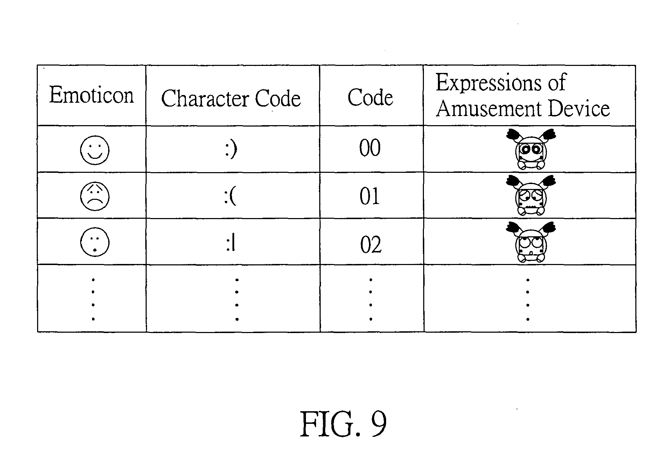

Please further refer to FIGS. 8A through 8C and 9, which are diagrams of one third embodiment of the present invention, wherein, the information communication software is one instant communication software, the data processing devices are computer D and computer E, and the data transmission system is one network system; in the present embodiment, each of the computer D and the computer E which can run the instant communication software, the computer D is the one that sends out emoticon, and the computer E is the one that receives the emoticon and brings about real motion corresponding to the emoticon.

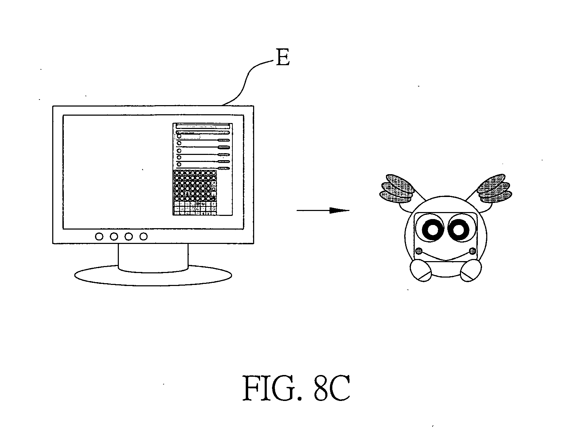

First, as shown in FIG. 8A, user of the computer A sends an emoticon " 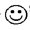 ", the icon surrounded by a black frame in the instant communication software as illustrated in the FIG., to another computer user, namely user of the computer E, via the instant communication software; next, as shown in FIG. 8B, after the computer E receives the emoticon sent from the computer D, software F intercepts the emoticon received by the instant communication software and interprets it into a specific character code, for example, the character code in the present embodiment is " :)" ; next, as shown in FIG. 8C, based on table shown in FIG. 9, software F of the computer E converts the interpreted code " :)" into a specific code applicable to the information communication and interaction device of the present invention, the specific code is one unique computer internal code corresponding to each information of aforesaid emoticon, for instance, according to the table, the specific code corresponding to character code " :)" is " 00" ; consequently after the information communication and interaction device of the present invention acquires the specific code " 00" from the computer E, the control unit processes determination step and commands the display part, e.g. LCD display as in the second embodiment, to display expression corresponding to the specific code.

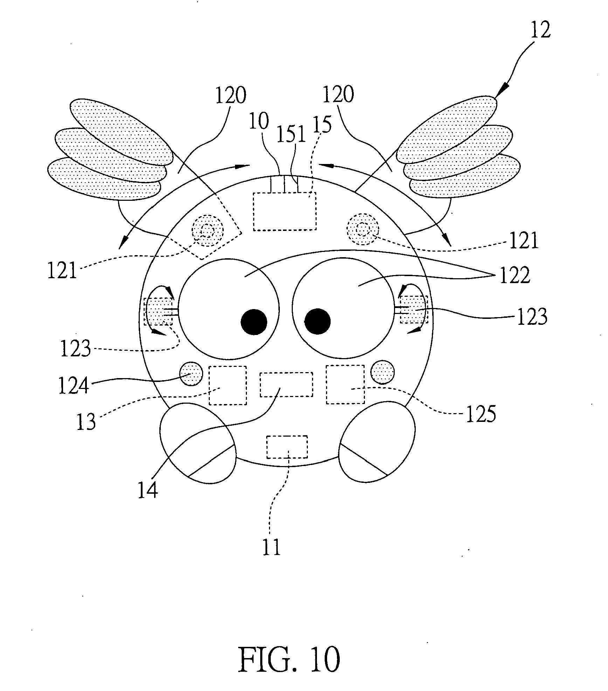

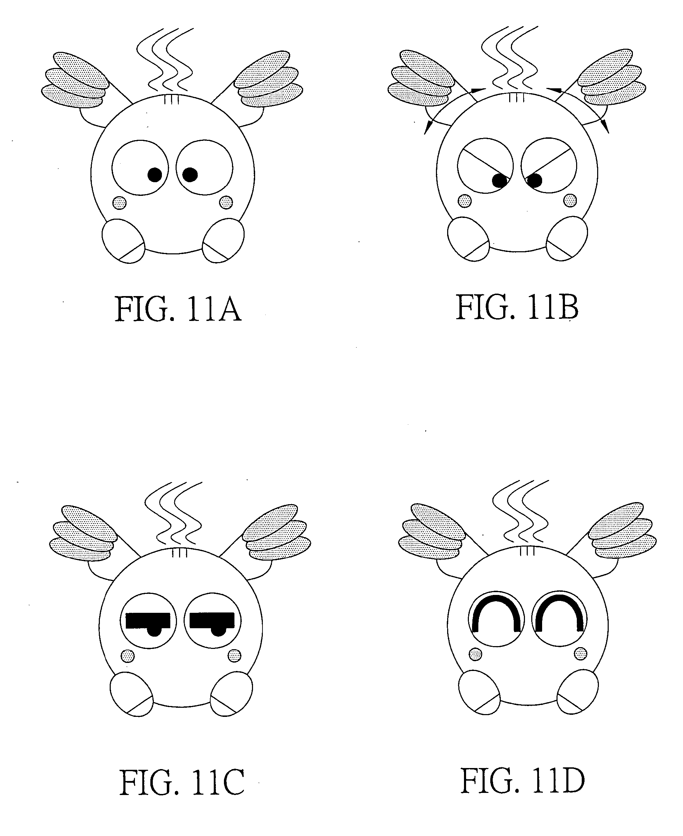

Please refer to FIG. 10, which is an appearance diagram of one fourth embodiment of the information communication and interaction device according to the present invention; as shown in the FIG., the fourth embodiment, same as the first embodiment, comprises elements including one body 10, one second data transmission unit 11, one motion unit 12, one drive unit 13, one control unit 14, one display part 124, and one loudspeaker 125; the main features of the fourth embodiment different from the first embodiment are: the fourth embodiment further comprises one scent emitting unit 15 and one cent emitting pore 151 that emits scent from the scent emitting unit 15; based on the received specific emoticon and message, the scent emitting unit 15 correspondingly emits specific scent to provide user with scented interaction amusement; as shown in FIGS. 11A through 11D, the control unit 14 processes information communication with the data processing device via the second data transmission unit 11 that is connecting to the first data transmission unit, wherein, in addition to foresaid command that drives the mechanism to bring about corresponding motion, the coded data of the communication data also includes command that drives the scent emitting unit 15 to emit specific scent via the scent emitting pore 151; therefore, at the time the control unit 11, based on the coded data, commands the drive unit 13 to drive the motor 121 to have the mechanism swing, it also correspondingly determines and selects different specific scent.

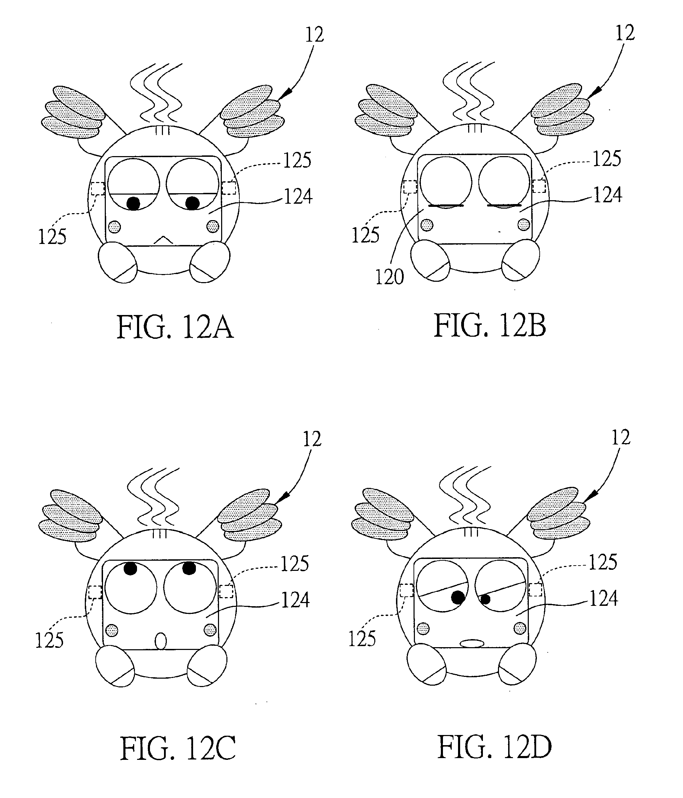

Please further refer to FIGS. 12A through 12D, which are appearance diagrams of one fifth embodiment of the information communication and interaction device of the present invention; as shown in the FIGS., the display part 124 of the fifth embodiment is LCD display that replaces the eye mechanism and LED of the fourth embodiment, along with the scent emitting unit 15, the LCD display provides more varieties for displaying information.

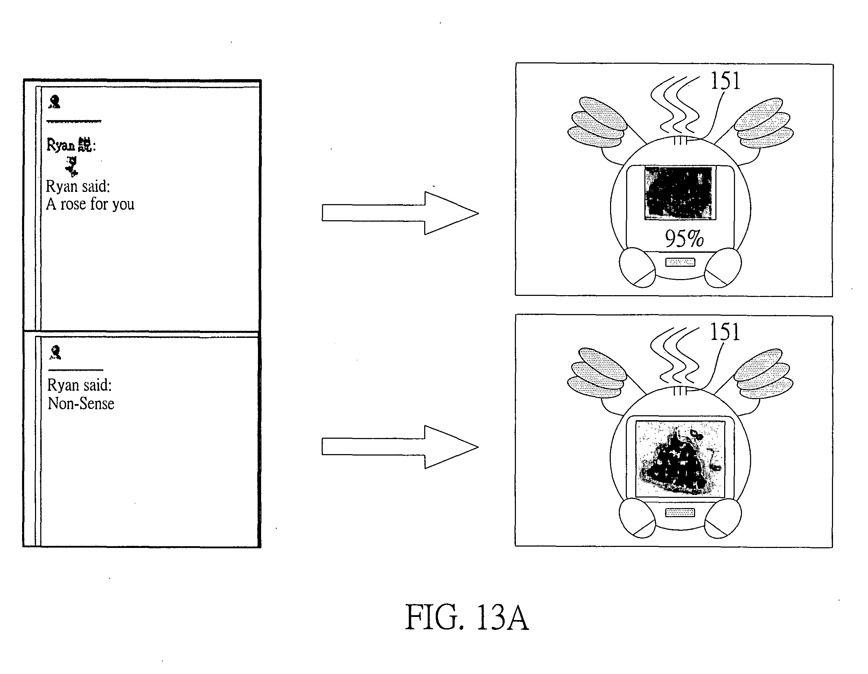

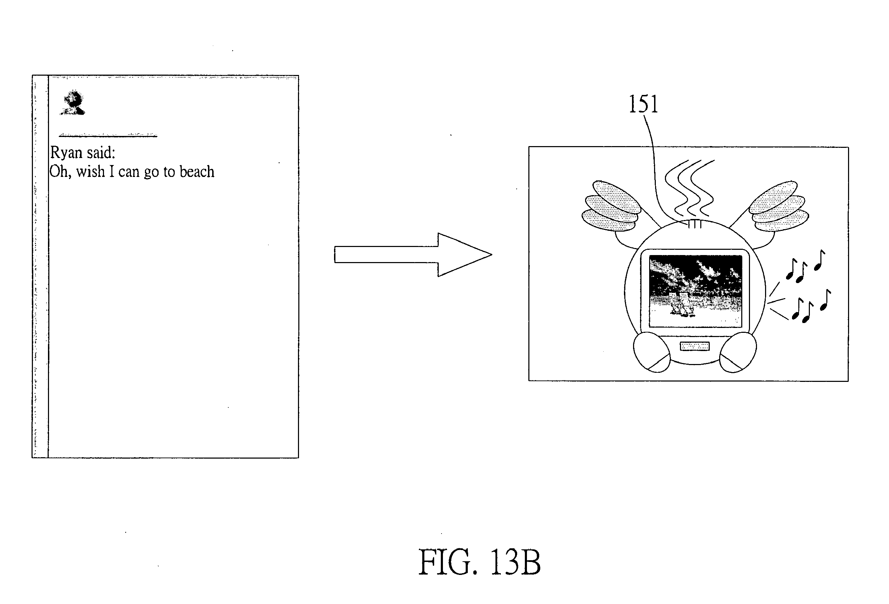

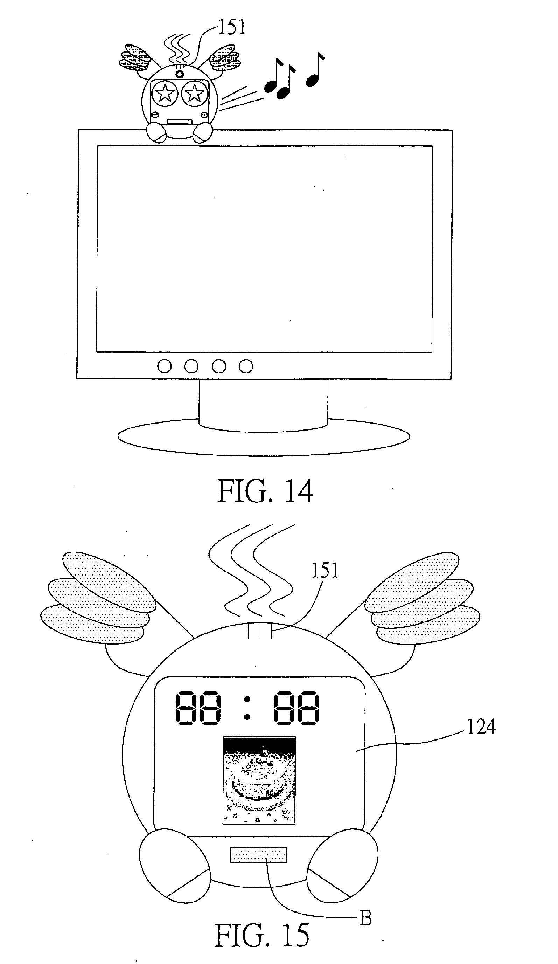

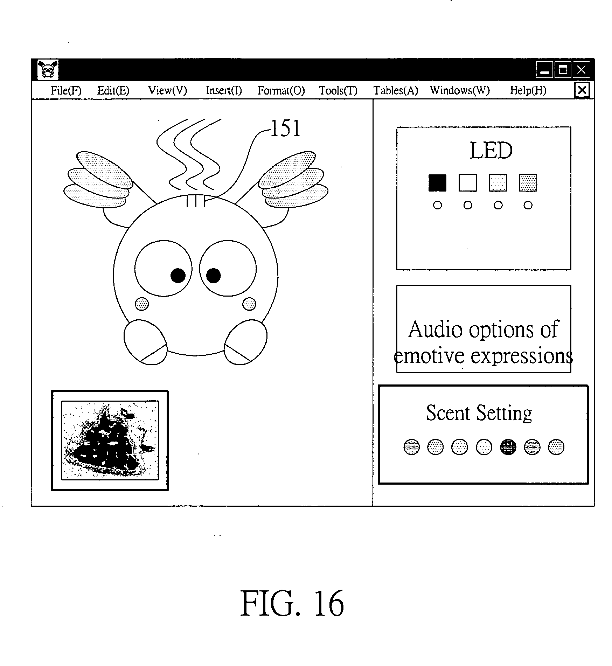

In addition, as shown in FIGS. 13A and 13B, based on specific emotion or message, the foregoing information communication and interaction device of the present invention in both the fourth embodiment and the fifth embodiment are capable of, in addition to emitting specific scent, displaying motion pictures of the scent and sound effect of specified percentage, for instance, a message of a wish of seeing beach is sent as shown in FIG. 13B, and then a motion picture of ocean is displayed, a scent of ocean is emitted, and sound effect of wave is played; besides, as shown in FIG. 14, the information communication and interaction device of the present invention can be used together with one webcam, camera lens is indicated as letter A in the FIG., and one specific scent is emitted in cope with scene caught by the camera; in addition, as shown in FIG. 15, the information communication and interaction device of the present invention displays time in a daily waiting state, letter B in the FIG. indicates one control key that is for adjusting to display time, for instance, a birthday date is preset, and then at the preset date, a corresponding preset scent is emitted, a motion picture of birthday cake is displayed, and a birthday song is played; one more additional feature, as shown in FIG. 16, user is allowed to, via the editing software C, adjust related settings of the information communication and interaction device of the present invention, e.g. color of the display part 124, sound effect or setting of interactive motion and scent of various expressions, and others on the data processing device.

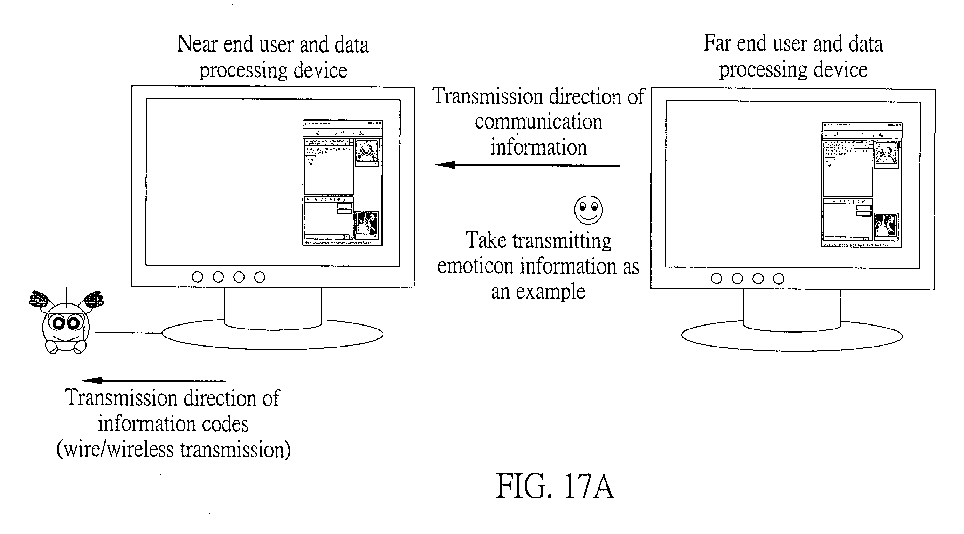

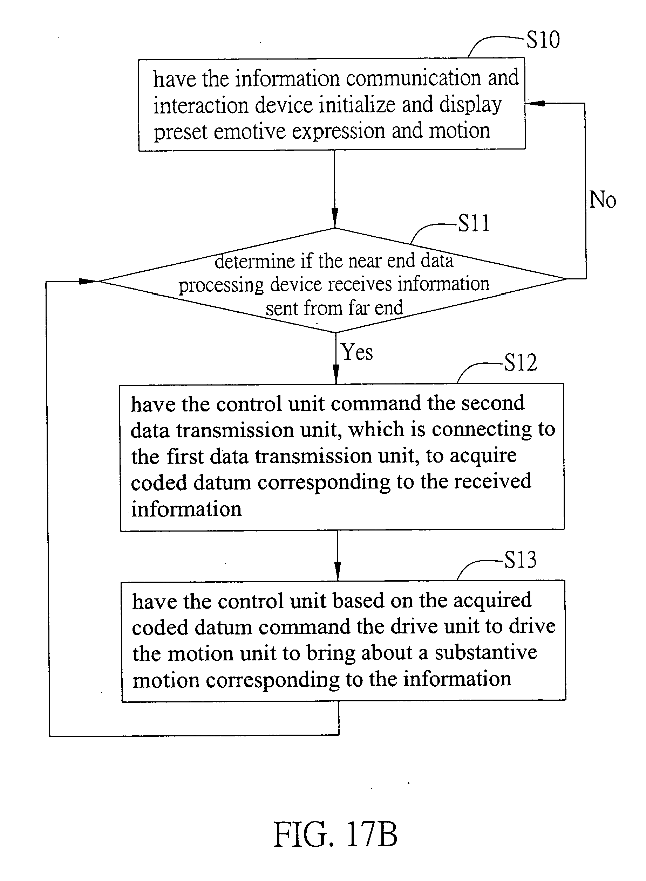

Please refer to FIGS. 17A and 17B, which are diagram and flowchart of one first embodiment of the information communication and interaction method of the present invention; the information communication and interaction method is executed through the foregoing claimed information communication and interaction device, and is applicable to both near end data processing device and far end data processing device, each of which can run the information communication software and has first data transmission unit, the near end data processing device receives communication information, e.g. emoticon information, from far end data processing device by using the information communication software via data transmission system; as shown in FIG. 17B, the information communication and interaction method of the present embodiment first executes step S10.

In step S10, have the information communication and interaction device initialize and display preset emotive expression and motion; proceed to step S11.

In step S11, determine if the information communication software of the near end data processing device receives information sent from far end; if yes, proceed to step S12; otherwise, proceed back to step S10.

In step S12, have the control unit 14 command the second data transmission unit 11, which is connecting to the first data transmission unit, to acquire coded datum corresponding to the received information; proceed to step S13.

In step S13, have the control unit 14, based on the acquired coded datum, command the drive unit 13 to drive the motion unit 12 to bring about a real motion corresponding to the information; and then proceed back to step S11.

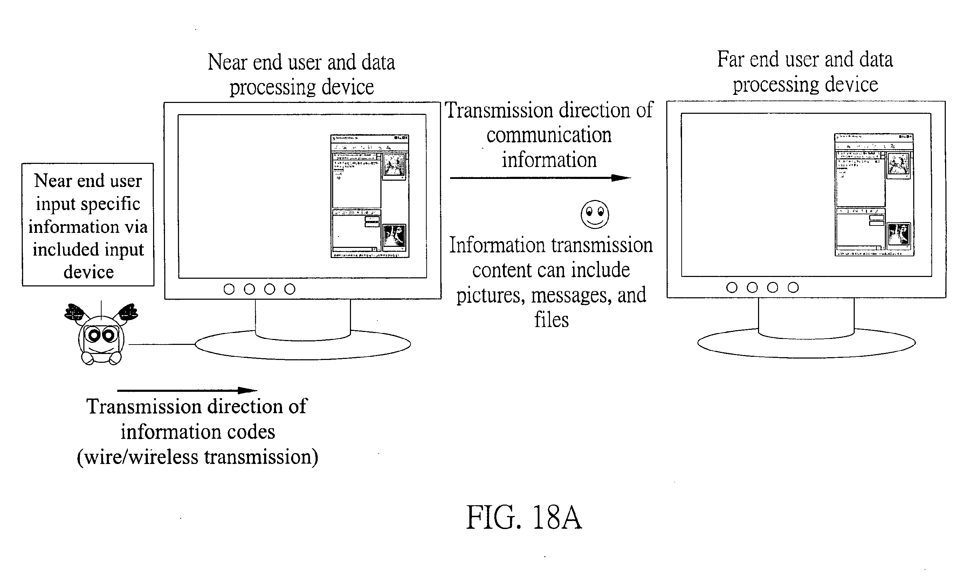

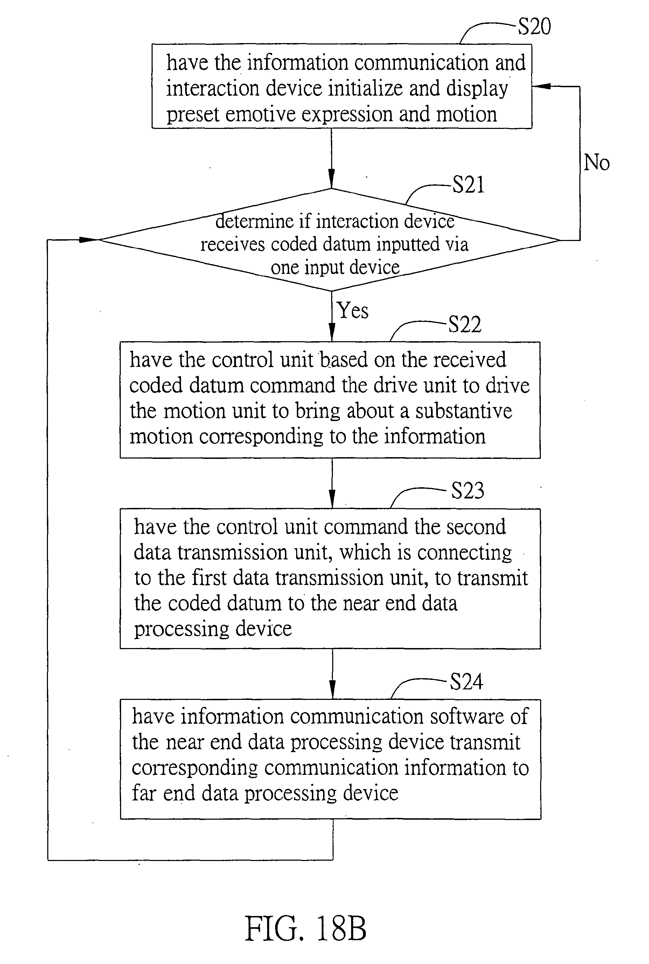

Please further refer to FIGS. 18A and 18B, which are diagram and flowchart of one second embodiment of the information communication and interaction method of the present invention; the near end data processing device can input specific information to the information communication software via input device, and then have the specific information transmit to the far end data processing device via data transmission system, transmitted content of the information can be pictures, messages, or files; as shown in FIG. 18B, the information communication and interaction method of the present embodiment first executes step S20.

In step S20, have the information communication and interaction device initialize and display preset emotive expression and motion; proceed to step S21.

In step S21, determine if interaction device receives coded datum inputted via the input device; if yes, proceed to step S22; otherwise, proceed back to step S20.

In step S22, have the control unit 14, based on the received coded datum, command the drive unit 13 to drive the motion unit 12 to bring about a real motion corresponding to the information; proceed to step S23.

In step S23, have the control unit 14 command the second data transmission unit 11, which is connecting to the first data transmission unit, to transmit the coded datum to the near end data processing device; proceed to step S24.

In step S24, have the information communication software of near end the data processing device transmit corresponding communication information to far end data processing device; and then proceed back to step S21.

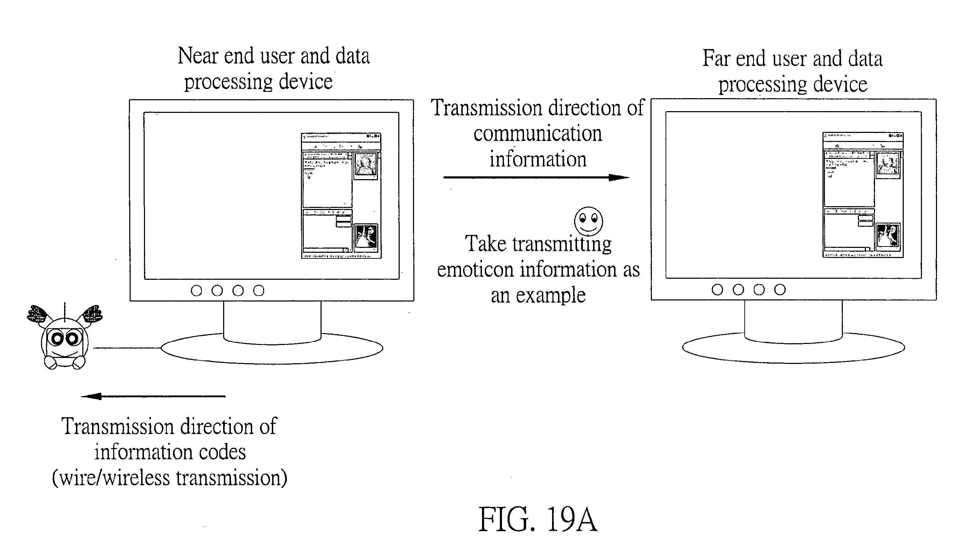

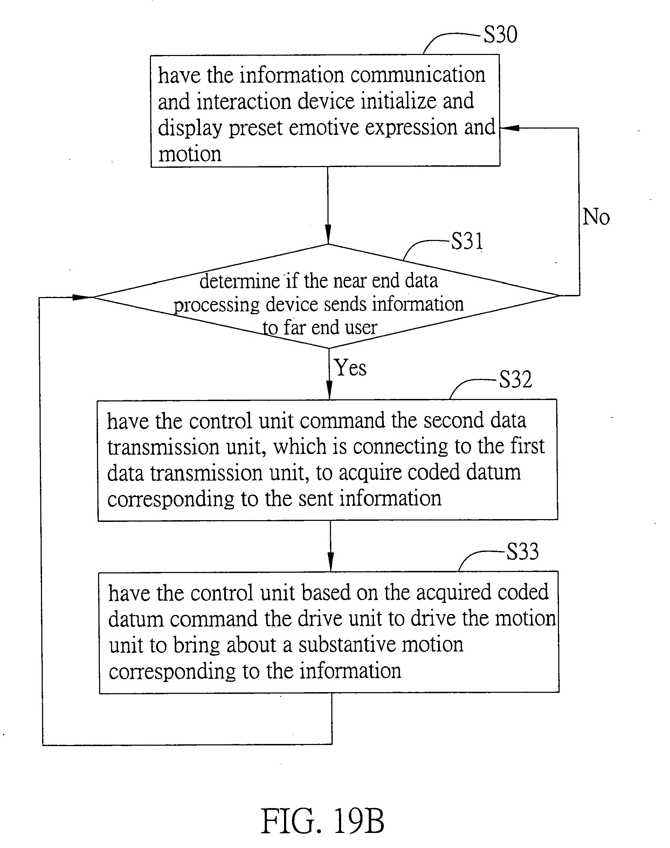

Please refer to FIGS. 19A and 19B, which are diagram and flowchart of one third embodiment of the information communication and interaction method of the present invention; the near end data processing device can transmit communication information, e.g. emoticon information, to far end data processing device by using the information communication software via data transmission system; as shown in FIG. 19B, the information communication and interaction method of the present embodiment first executes step S30.

In step S30, have the information communication and interaction device initialize and display preset emotive expression and motion; proceed to step S31.

In step S31, determine if the information communication software of the near end data processing device sends communication information to far end user; if yes, proceed to step S32; otherwise, proceed back to step S30.

In step S32, have the control unit 14 command the second data transmission unit 11, which is connecting to the first data transmission unit, to acquire coded datum corresponding to the sent information; proceed to step S33.

In step S33, have the control unit 14, based on the acquired coded datum, command the drive unit 13 to drive the motion unit 12 to bring about a real motion corresponding to the information; proceed back to step S31.

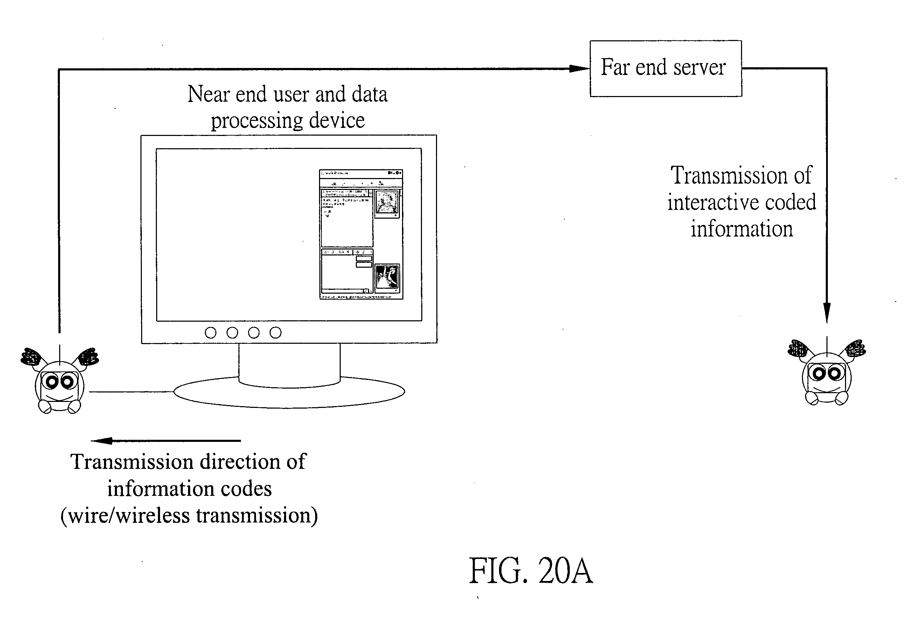

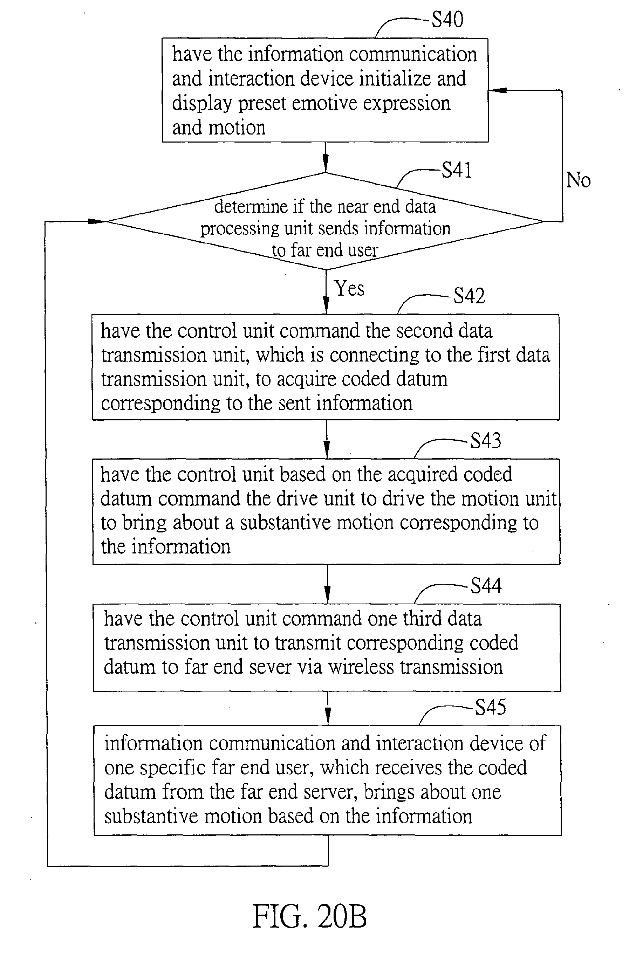

Please refer to FIGS. 20A and 20B, which are diagram and flowchart of one fourth embodiment of the information communication and interaction method of the present invention; the near end data processing device can transmit communication information to one far end server 16 by using the information communication software via data transmission system, and then the far end data processing device receives the communication information transmitted by the far end server; as shown in FIG. 20B, the information communication and interaction method of the present embodiment first executes step S40.

In step S40, have the information communication and interaction device initialize and display preset emotive expression and motion; proceed to step S41.

In step S41, determine if near end data processing unit sends communication information to far end user; if yes, proceed to step S42; otherwise, proceed back to step S40.

In step S42, have the control unit 14 command the second data transmission unit 11, which is connecting to the first data transmission unit, to acquire coded datum corresponding to the sent communication information; proceed to step S43.

In step S43, have the control unit 14, based on the acquired coded datum, command the drive unit 13 to drive the motion unit 12 to bring about a real motion corresponding to the information; proceed to step S44.

In step S44, have the control unit 14 command one third data transmission unit (not shown in the FIGS.) to transmit corresponding coded datum to the far end sever 16 via wireless transmission; proceed to step S45.

In step S45, the information communication and interaction device of one specific far end user, which receives the coded datum from the far end server, brings about one real motion based on the transmitted coded datum; proceed back to step S41.

It should be noted that the detailed application methods of each step of the claimed information communication and interaction method of the present invention are same as those of foregoing claimed information communication and interaction device, and there is no need of repetitive descriptions herein.

In view of the above, the information communication and interaction device and method for the same of the present invention mainly have the control unit process information communication with data processing device via the second data transmission unit that is connecting to the first data transmission unit, and based on the coded datum of the communication information, the control unit commands the drive unit to drive the motion unit to bring about real motion corresponding to the information; therefore, signified conception of the information can be expressed properly by means of real interaction, thereby bringing about better effects on interaction and emotive expression; in addition, since the information communication and interaction device and method for the same of the present invention provide real expression, user with nearby data processing device can be alerted to incoming information from other users, thereby correspondingly bringing about alerting effects and taking advantage of instant communication provided by information communication software.

The foregoing descriptions of the detailed embodiments are only illustrated to disclose the features and functions of the present invention and not restrictive of the scope of the present invention. It should be understood to those in the art that all modifications and variations according to the spirit and principle in the disclosure of the present invention should fall within the scope of the appended claims.

## Claims

1. An information communication and interaction device, which is applicable to data processing device that can run the information communication software and has one first data transmission unit; the data processing device is capable of processing information communication and sharing by using the information communication software via one data transmission system; the information communication and interaction device comprises:
one body;
one second data transmission unit, which is set inside the body, is for connecting to the first data transmission unit via either wire or wireless means;
one motion unit, which is set inside the body, is for bringing about corresponding motion after being driven;
one drive unit, which is set inside the body, is for driving the drive unit; and
one control unit, which is set inside the body and electrically connecting to the second data processing unit and the drive unit, is for processing information communication with the data processing device that has the first data transmission unit via the second data transmission unit, and based on coded datum of the communication information, the control unit commands the drive unit to drive the motion unit to bring about real motion corresponding to the information.

2. The information communication and interaction device according to claim 1, wherein, the body has input device, and based on coded datum of inputted message, the interaction device is driven to bring about corresponding real motion; and the input device is at least one of the group of electronic switch, touch control device, keying device, microphone, and sensor.

3. The information communication and interaction device according to any of claims 1 to 2, wherein, the first data transmission unit and the second data transmission unit are communication interfaces with data transmission protocol of one of the group of bluetooth, infra-red ray, IEEE 802.11, and WiMax.

4. The information communication and interaction device according to any of claims 1 to 3, wherein, the first data transmission unit and the second data transmission unit are connectors with one of group of IEEE 1394 and USB data transmission interface.

5. The information communication and interaction device according to any of claims 1 to 4, wherein, the data processing device is one of the group of computer, cell phone, personal digital assistant (PDA), and any digital device which can run the information communication software.

6. The information communication and interaction device according to any of claims 1 to 5, wherein, the motion unit comprises at least one of the group of mechanism, display part, and loudspeaker.

7. The information communication and interaction device according to any of claims 1 to 6, wherein, the mechanism is one mechanism that is driven by driven unit that provides external force, the display part is driven by the drive unit that is one of the group of LED, LCD display, LED display, plasma display, and CRT display, and the loudspeaker is driven by the drive unit that is a speaker.

8. The information communication and interaction device according to any of claims 1 to 7, wherein, the control unit is one control IC.

9. The information communication and interaction device according to any of claims 1 to 8, wherein, further comprises one power unit, which is set inside the body for providing power, and the power unit is one of the group of battery, solar energy, and power supply cord.

10. The information communication and interaction device according to any of claims 1 to 9, wherein, further comprises one scent emitting unit, which is installed inside the body and is for correspondingly emitting specific scent based on the received coded datum.

11. An information communication and interaction method, which comprises:
provide one interaction device and have it connect to the first data transmission unit of the data processing device;
acquire coded datum corresponding to information transmitted from far end and received by the information communication software; and
based on the coded datum, drive the interaction device to bring about one real motion corresponding to the information.

12. An information communication and interaction method, which comprises:
provide one interaction device and have it connect to the first data transmission unit of the data processing device;
input specific message coded datum through input device of the interaction device;
drive the interaction device to bring about one real motion corresponding to the information based on the inputted coded datum;
have the second data transmission unit transmit corresponding coded datum to the data processing device that has the first data transmission unit; and
have the data processing device transmit communication information corresponding to the received coded datum to data processing device of far end user via information communication software.

13. An information communication and interaction method, which comprises:
provide one interaction device and have it connect to the first data transmission unit of the data processing device;
at the time that one user transmits specific communication information to data processing device of far end user through information communication software of data processing device, have the first data transmission unit transmit corresponding coded datum to information communication and interaction device that has second data transmission unit; and
based on the coded datum, drive the interaction device to bring about one real motion corresponding to the information.

14. An information communication and interaction method, which comprises:
provide one interaction device and have it connect to the first data transmission unit of the data processing device;
at the time that one user transmits specific communication information to data processing device of far end user through information communication software of data processing device, have the first data transmission unit transmit corresponding coded datum to information communication and interaction device that has second data transmission unit;
based on the coded datum, drive the interaction device to bring about one real motion corresponding to the information;
have the interaction device transmit its real interaction coded datum to one far end server via one third data transmission unit by means of wireless transmission; and
have interaction device of one specific far end user receive the coded datum sent from the far end server, and then based on the coded datum, drive the interaction device to bring about one real motion corresponding to the information.

15. The information communication and interaction method according to any of claims 11 to 14, wherein, the interaction device comprises:
one body;
one second transmission unit, which is set inside the body and is for connecting to the first data transmission unit via a wireless or wire means;
one motion unit, which is set on the body and is for bringing about corresponding motion after being driven;
one drive unit, which is installed inside the body and is for driving the drive motion unit; and
one control unit, which is installed inside the body and is for electrically connecting to the second data transmission unit and the drive unit; the control unit is for processing information communication with the data processing device that has first data transmission unit via the second data transmission unit; and based on coded datum of the communication information, the control unit commands the drive unit to drive the motion unit to bring about real motion corresponding to the information.

16. The information communication and interaction method according to claim 15, wherein, the body has input device, based on coded datum of inputted message, drive the interaction device to bring about corresponding real motion; and the input device is at least one of the group of electronic switch, touch control device, keying device, microphone, and sensor.

17. The information communication and interaction method according to any of claims 15 to 16, wherein, the first data transmission unit and the second data transmission unit are communication interfaces with data transmission protocol of one of the group of bluetooth, infra-red ray, IEEE 802.11, and WiMax.

18. The information communication and interaction method according to any of claims 15 to 17, wherein, the first data transmission unit and the second data transmission unit are connectors with one of group of IEEE 1394 and USB data transmission interface.

19. The information communication and interaction method according to any of claims 15 to 18, wherein, the data processing device is one of the group of computer, cell phone, personal digital assistant (PDA) and any digital device which can run the information communication software.

20. The information communication and interaction method according to any of claims 15 to 19, wherein, the motion unit comprises at least one of the group of mechanism, display part, and loudspeaker.
